(19)

Europäisches Patentamt

European Patent Office

Office européen des brevets

(11) **EP 3 292 376 B1**

(12) **EUROPEAN PATENT SPECIFICATION**

(45) Date of publication and mention of the grant of the patent:
**25.09.2019 Bulletin 2019/39**

(21) Application number: **15891072.9**

(22) Date of filing: **05.05.2015**

(51) Int Cl.:
***G01C 21/36*** *(2006.01)*   ***G10L 15/22*** *(2006.01)*

(86) International application number:
**PCT/CN2015/078264**

(87) International publication number:
**WO 2016/176820 (10.11.2016 Gazette 2016/45)**

(54) **AUTOMATIC DATA SWITCHING APPROACH IN ONBOARD VOICE DESTINATION ENTRY (VDE) NAVIGATION SOLUTION**

VERFAHREN FÜR AUTOMATISCHE DATENUMSCHALTUNG IN EINER BORDEIGENEN VDE-NAVIGATIONSLÖSUNG

APPROCHE DE COMMUTATION AUTOMATIQUE DE DONNÉES SELON UNE SOLUTION DE NAVIGATION EMBARQUÉE UTILISANT UNE ENTRÉE VOCALE DE DESTINATION (VDE)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.03.2018 Bulletin 2018/11**

(73) Proprietor: **Nuance Communications, Inc.**
**Burlington, MA 01803 (US)**

(72) Inventors:
• **HAN, Kesong**
**Shanghai 200122 (CN)**
• **CHEN, Dennis**
**Shanghai 200122 (CN)**
• **XU, Ran**
**Beijing 100015 (CN)**

(74) Representative: **Høiberg P/S**
**Adelgade 12**
**1304 Copenhagen K (DK)**

(56) References cited:
**JP-A- 2006 251 298     US-A1- 2005 182 561**
**US-A1- 2007 124 057     US-A1- 2008 091 443**

EP 3 292 376 B1

**Description**

BACKGROUND OF THE INVENTION

Voice-enabled navigation applications are commonly used by mobile communication systems to provide convenient, hands-free facility for negotiating a path to a particular destination. For certain countries, the number of geographical items (also referred herein as geographical data, e.g., Points of Interest (Pols), street names and cross road information) may be too large for a typical embedded navigation system to process efficiently.

To improve performance, navigation systems designed to operate in such countries typically segregate geographical items associated with the entire country into individual geographical data files, and organize the data files by relevant geographical regions. For example, in China, the geographical data files may be organized according to province, while in the USA, the data files may be organized according to state.

The content of the data files may include, for example, context for a speech recognition system, information forming the knowledge base for Voice Destination Entry (VDE), and generally any information that may be used by a navigation system. As used herein, VDE refers to searching within a data repository for candidates that match, at least to some extent, a VDE input.

Organizing the data files based on geographical region enables more efficient data access. When the navigation system is known to be located within a particular region, the navigation system can limit its search for geographical items to the data file associated with that region, rather than searching through its complete list of geographical items.

As the navigation system approaches or crosses into a different geographical region, a navigation system may switch the data file in which the navigation system searches for geographical items. One way for a navigation system to effect the change from a geographical data file associated with one geographical location, to another geographical data file, is to add a dialogue cycle in the VDE solution, i.e., to use an extra utterance to switch the data. For example:

User: "Switch to Zhejiang province"
System: "Do you want to switch to Zhejiang province?"
User: "Yes".
System: "Switched to Zhejiang province"

Given that an Automatic Speech Recognition (ASR) cannot provide 100% recognition accuracy, and a Natural Language Understanding (NLU) cannot correctly construe all word strings presented to it, adding a dialogue cycle such as the one presented above means that (i) users may need to speak one or more additional utterances to complete the VDE setting, and (ii) there is a risk of the failure of the entire VDE task.

U.S. Patent Application 11/549,496 (Pub. No US 2008/0091443 A1) discloses a method of operating a voice-enabled business directory search system including prompting a user to provide a type of business and an identifier of a specific business, receiving from the user a speech input having information about the type of business and the identifier, and recognizing, using a speech recognition module, the identifier based on the type of business. The method may use language models but does not solve issues relating to the selection of geographical data files in for example voice-enabled navigation in mobile communication systems.

SUMMARY OF THE INVENTION

Embodiments described herein include techniques for automatically switching between information repositories (also referred to herein as geographical data files or data files) that contain geographical content, in an onboard navigation system that utilizes a Voice Destination Entry (VDE) feature. The described embodiments determine, based on one or more VDE inputs from a user, if the currently-active geographical data file should be used to search for geographical item candidates, or if two or more geographical data files should be used. The described embodiments may produce a list of VDE candidates from which the user selects. The described embodiments may populate this list from one or more data files, depending on an evaluation of the VDE input from the user. Presented herein is an example embedded navigation system according to the described embodiments.

In one aspect, the invention is a method of selecting a geographical data file for voice destination entry (VDE), as defined in claim 1.

In one embodiment, determining a VDE-type may further include determining the VDE-type to be Type_1 when (i) the VDE input includes a Leading Word that explicitly identifies the current geographical region, or (ii) the VDE input includes no Leading Word. Determining the VDE-type to be Type_1 may further include setting the switching confidence factor to zero when the VDE-type is determined to be Type_1.

In another embodiment, determining a VDE type further includes determining the VDE-type to be Type_2 when the VDE input includes a Leading Word that describes a non-default geographical region and a Leading Word Suffix.

Determining the VDE-type to be Type_2 may further include setting the switching confidence factor to a value indicating that switching from the first data file to the second data file is more likely than not, when the VDE-type is determined to be Type_2.

In one embodiment, determining a VDE-type further includes determining the VDE-type to be Type_3 when the VDE input includes a Leading Word that describes a non-default geographical region and without a Leading Word Suffix.

In another embodiment, retrieving the first number of candidates and the second number of candidates is further based on the VDE input being a member of a switching likelihood word list. In one embodiment, the switching likelihood word list includes one or more of (i) a no-switching word list containing words, each of which is associated with a decision to switch from the first data file to the second data file, when that word occurs immediately after its corresponding Leading Word, (ii) a switching word list containing words, each of which is associated with a decision to remain with the first data file, when that word occurs immediately after its corresponding Leading Word and (iii) a dynamic word list containing high-frequency words associated with a particular Leading Word.

One embodiment further includes displaying the candidates from the first data file and the candidates from the second data file. An order of the candidates may be based at least in part on the VDE input being a member of the switching likelihood word list.

In one embodiment, the first data file contains geographical data associated with a current geographical region, and the second data file contains geographical data associated with a geographical region other than the current geographical region.

In another aspect, the invention is an apparatus for selecting a geographical data file for voice destination entry (VDE), as defined in claim 11.

In another embodiment, the processor may be further configured to execute the instructions thereby causing the apparatus to designate the VDE-type to be Type_1 when the VDE input includes a Leading Word that explicitly identifies the current geographical region, or the VDE input includes no Leading Word.

In another embodiment, the processor may be further configured to execute the instructions thereby causing the apparatus to designate the VDE-type to be Type_2 when the VDE input includes a Leading Word and a Leading Word Suffix.

In another embodiment, the processor may be further configured to execute the instructions thereby causing the apparatus to designate the VDE-type to be Type_3 when the VDE input includes a Leading Word without a Leading Word Suffix.

In another embodiment, the processor may be further configured to execute the instructions thereby causing the apparatus to display the candidates from the first data file and the candidates from the second data file, wherein an order of the candidates is based at least in part on the VDE input being a member of a switching likelihood word list.

In another aspect, the invention is a non-transitory computer-readable medium with computer code instruction stored thereon, as defined in claim 14.

In another embodiment, the computer code instructions when executed by an a processor further cause an apparatus to display the candidates from the first data file and the candidates from the second data file, wherein an order of the candidates is based at least in part on the VDE input being a member of a switching likelihood word list.

In another embodiment, the computer code instructions, when executed by an a processor, further cause an apparatus to determine the VDE-type to be Type_1 when the VDE input includes a Leading Word that explicitly identifies the current geographical region, or the VDE input includes no Leading Word.

BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.

FIG. 1A shows a vehicle equipped with an onboard navigation system that utilizes VDE, traveling well within the Shanghai Province.
FIG. 1B shows the same vehicle traveling in the Shanghai Province, but near to and towards the Zhejiang Province.
FIG. 1C shows the driver of the vehicle, along with the onboard navigation system.
FIG. 2 illustrates a flow diagram of the example embodiment.
FIG. 3 illustrates a block diagram of an example embedded navigation system that may be used to implement and/or support one or more of the described embodiments.
FIG. 4 illustrates an example hardware platform that may be used to implement one or more of the sub-systems depicted in FIG. 3.

## DETAILED DESCRIPTION OF THE INVENTION

A description of example embodiments of the invention follows.

The described embodiments include techniques for automatically switching between information repositories (also referred to herein as geographical data files or data files) that contain geographical content, in an onboard navigation system that utilizes a Voice Destination Entry (VDE) feature. The described embodiments determine, based on one or more VDE inputs from a user, if the currently-active geographical data file should be used to search for geographical item candidates, or if two or more geographical data files should be used. The described embodiments may produce a list of VDE candidates from which the user selects. The described embodiments may populate this list from one or more data files, depending on an evaluation of the VDE input from the user. Presented herein is an example embedded navigation system according to the described embodiments.

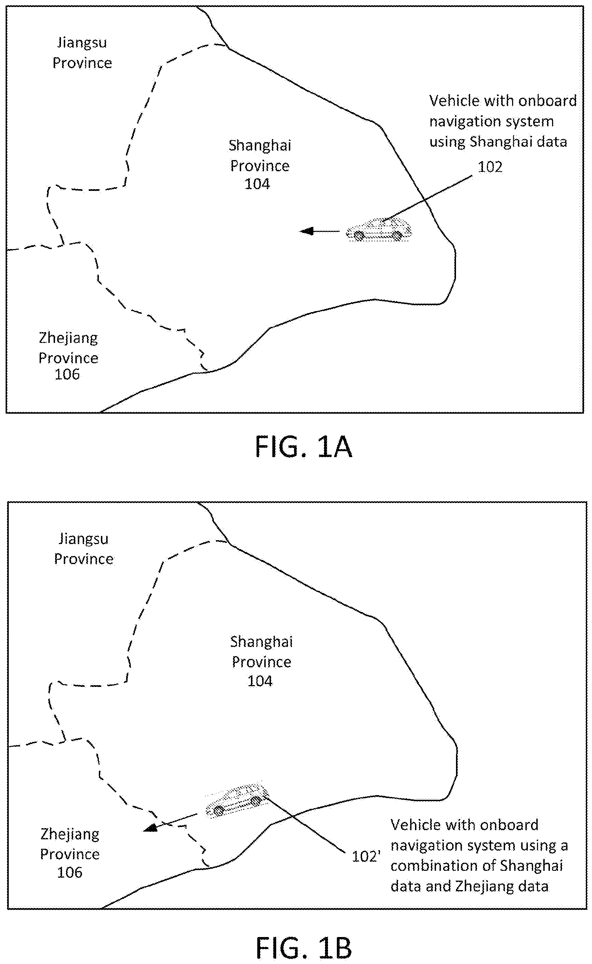

The example embodiments described herein relate to a navigation system, initially located in Shanghai province, which is traveling from Shanghai province to Zhejiang province. FIGs. 1A through 1C illustrate a simple example of how the described embodiments may be used. FIG. 1A shows a vehicle 102 equipped with an onboard navigation system that utilizes VDE, traveling well within the Shanghai Province 104. FIG. 1B shows the same vehicle 102' traveling in the Shanghai Province 104, but near to and towards the Zhejiang Province 106. The onboard navigation system may utilize Shanghai Province data for VDE while located well within the Shanghai Province, and be updated with Zhejiang Province data (as described below - instead of or in addition to the Shanghai Province data) as the vehicle nears the Zhejiang Province. It should be understood that the data can be updated according to any level of granularity; for instance, in the United States, granularities can be by state, city, town, or other geographic designation.

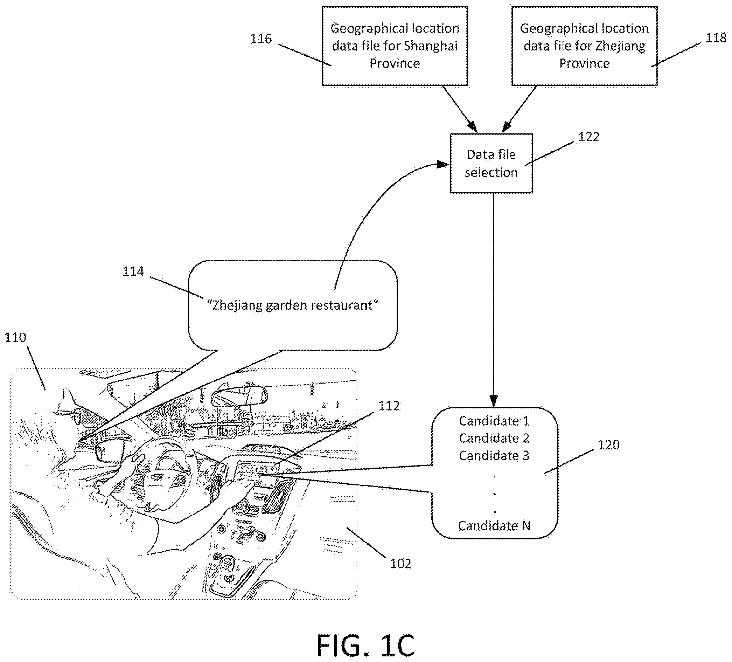

FIG. 1C shows the driver 110 of the vehicle 102, along with the onboard navigation system 112. In this example, the driver 110 utters a voice destination entry 114 of "Zhejiang Garden Restaurant." If the vehicle 102 is in the scenario shown in FIG. 1A, the actual location referred to by the VDE 114 may be more likely to reside in the geographical data file for the Shanghai Province 116, since the vehicle 102 is within the Shanghai Province and relatively far from the province borders. On the other hand, if the vehicle 102' is in the scenario shown in FIG. 1B, the actual location referred to by the VDE 114 may reside in either the geographical data file for the Shanghai Province 116, or the geographical data file for the Zhejiang Province, since the vehicle 102 is near the Zhejiang Province, although still within the Shanghai Province.

The described embodiments may provide a list of candidates 120 to the user, corresponding to the uttered VDE 114, from which the user may select. The candidates 120 may be provided on a display, through an audio message, or both. The described embodiments select 122, based on the VDE 114, one or more of the data files 116, 118 (or others) from which to select the candidates 120. The data file selection 122 may select more candidates from one of the location data files 116, 118, based on the context of the VDE as described herein.

In the described embodiments, the contexts for Automatic Speech Recognition (ASR) are designed to contain all the province and city entries, referred to herein as "Leading Words," as described below. As used herein, a Leading Word is a word used immediately before a VDE subject, to designate a geographical region associated with the VDE subject. Shanghai, Zhejiang and Hangzhou are examples of Leading Words. It should be noted that while the example embodiments relate to geographical locations in China, the described embodiments may be used in other parts of the world. For example, Leading Words in the United States may include Massachusetts, Florida and Delaware; Leading Words in Canada may include Quebec, Vancouver and Ontario.

### VDE-type Categories

The described embodiments may segregate VDE inputs into different categories, and process a particular VDE input based (at least partially) based on its associated category. One embodiment includes a "VDE-type" classifier to sort the VDE inputs into their respective categories.

In the VDE-type examples below, the current location of the navigation system is Shanghai, so the default geographical region is Shanghai.

Type 1 - VDE subject with no Leading Word, which implies the default (i.e., current) geographical region, or VDE with a Leading Word that explicitly names the default geographical region. For example:

"Pacific | Department Store" has no Leading Word, so the default geographical region (Shanghai in this example) is assumed.

"Shanghai | Hongqiao | Railway Station" has a Leading Word of "Shanghai," which is the default geographical region for this example.)

**Type 2** - VDE subject with Leading Word identifying a non-default region, and with associated suffix information. A Leading Word Suffix may include terms such as "Province," "City," et al. An Example of a "Leading Word" and "Leading Word Suffix" pair is "Zhejiang | Province." In this example, "Zhejiang" is the Leading Word and "Province" is the Leading Word Suffix. Other examples include "Hangzhou | City," "West | Lake," "Datong | High school," and "Fuxing | Park."

**Type 3** - VDE subject with Leading Word identifying a non-default region, but without associated suffix information. An example of this VDE address is "Hangzhou | West | Scenic." In this example, the Leading Word is Hangzhou, but there is no associated suffix such as city.)

## Tend-to-switch Tag

The described embodiments may include a tag that provides information that may be used for selecting VDE candidates corresponding to a given VDE input. This tag is referred to herein as the "tend-to-switch" tag (TTS_tag), and may be used when it is unclear to which geographical region the VDE input refers. The TTS_tag can take on one of three states: TRUE, FALSE or N/A. As is described in more detail below, the TTS_tag is used to determine how VDE candidates may be selected from the various data files, and how the candidates are ordered, as follows:

TTS_tag = TRUE indicates that for the associated VDE input, the navigation system should:

(i) select more than half of candidates from a non-default data file (i.e, a data file other than the default data file). In other words, the navigation system should switch data files - for example, from the Shanghai data file to the Zhejiang data file, and
(ii) select fewer than half of candidates from the default data file.

TTS_tag = FALSE indicates that for the associated VDE input, the navigation system should:

(i) select more than half of candidates from the default data file, and
(ii) select fewer than half of candidates from the non-default data file.

A determination as to whether TTS_tag will be TRUE or FALSE may be made based on the switching-confidence factor, described below.

A third possible state for the tend-to-switch tag is TTS_tag = N/A (Not Applicable), which may be used when a high level of confidence exists that the VDE input refers to a location within the default region.

## Switching-confidence Factor

The described embodiments may further include a factor that corresponds to a level of confidence associated with a particular VDE input. This factor is referred to herein as the "switching-confidence" factor (SC_factor). The SC_factor, in the example embodiments, takes on a value between zero and one ($0 \leq SC\_factor \leq 1$). An SC_factor with a value near one corresponds to a VDE input that would, with a high level of confidence, set the TTS_tag = TRUE (i.e., the navigation system will switch data files). An SC_factor with a value near zero corresponds to a VDE input that would, with a high level of confidence, set the TTS_tag = FALSE (i.e., the navigation system will use the default data file and will not switch data files).

The VDE candidates may be compared to a predetermined, explicit switching-confidence threshold (e.g., 0.7 in the example embodiments), such that only candidates exceeding this threshold would result in TTS_tag = TRUE. Without an explicit threshold, a default threshold at or near 0.5 may be used.

As described in detail herein, a navigation system according to the described embodiments may use the SC_factor (at least in part) to determine a distribution of VDE candidates, some or all of which may be presented to the user of the navigation system for manual selection of a VDE candidate. A switching-confidence threshold, as described above, may be used to determine which VDE candidates are to be presented to the user. The SC_factor may also be used to determine the state of the TTS_tag as described herein.

## Switching/no-switching Word Lists

As used herein the term "switching" refers to the use of a non-default data file (i.e., a data file other than the default data file). In other words, the navigation system may "switch" data files in certain cases - for example, from the Shanghai data file to the Zhejiang data file. In some cases, switching may refer to selecting candidates exclusively from a non-default data file, while in other cases the switching may refer to selecting more candidates from the non-default data file than the default data file.

Some embodiments may compile two word lists for a particular Leading Word; a "no-switching" word list and a "switching" word list. The "switching" word list may include words, each of which is associated with a decision to switch from the default data file to a non-default data file, when that word occurs immediately after its corresponding Leading Word. The "no-switching" word list may include words, each of which is associated with a decision to remain with the default data file, when that word occurs immediately after its corresponding Leading Word. The no-switching-word-list may include words such as "Hotel" "Restaurant" "Road" "Street" and "Snack," while the switching-word-list may contain words such as "Office," "Branch," and "Sub-branch," among others.

Each word in the switching word list and the no-switching word list may be associated with a switching confidence factor (SC_factor) that characterizes the probability that switching from one geographical data file to another is the correct decision. The SC_factor may be determined by, for example, a Bayesian decision as describe below, although other techniques known in the art for determining such a probability may also be used.

**Dynamic Word Lists**

Some embodiments may dynamically collect, for a particular Lead Word, a list of high-frequency words (i.e., words that the user speaks often), and use a Bayesian decision to calculate the switching-confidence for each Leading Word/high frequency word pair.

For instance, the dynamic-word list under the Leading Word "Hangzhou" (or equivalently "HangzhouCity" based on the Chinese representation of 杭州市) may include the following word:probability pairs:

    Hangzhou:896
    Cloth:336
    Distributor:494
    Forklift:210
    Door Industry:375
    Curtain:41
    South:461
    Monopoly:483
    Road:490
    Dumplings:1
    Umbrella:485
    Ceramics:48
    Shenzhen:363
    Angel:314
    Heaven:387
    Longjing:333
    Confluence:300
    Nanjing:458
    Hongyan:166
    Community:269
    Donghua:470

For the example above, the notation <Forklift:210> means that the probability of needing to switch from a current geographical data file to a different geographical data file is 0.210 when the word "forklift" is used by itself, i.e., regardless of the specific geographical data files being considered. The <word:probability> pairs may be accessed from a segmented PoI database, which may be compiled empirically or by other techniques known to those skilled in the art.

Therefore, taking VDE "Hangzhou Forklift" as an example, the Bayesian confidence may be calculated as:

$$\text{conf(Hangzhou Forklift )} = \text{conf (Hangzhou)} * \text{conf (Forklift)} \ /$$

$$[\text{conf (Hangzhou)} * \text{conf (Forklift)} + \text{conf}'\text{(Hangzhou)} * \text{conf}'\text{(Forklift)}]$$

$$= 0.896*0.210 \ / \ [0.896*0.210+0.104*0.790]$$

$$= 0.696,$$

where conf (X) is the probability that X is a switching word, while conf'(X) is 1-conf(X).

In the example embodiment, a confidence threshold is predefined as 0.7. Since the calculated confidence of 0.696 is less than 0.7, the tag for "Hangzhou Forklift" will be set as "TTS_tag = FALSE" and "SC_factor = 0.696." For this example, the described embodiment places the word "Forklift" into the "no-switching" list because the TTS_tag = FALSE.

**Processing Different VDE Types**

Some embodiments may apply different strategies for different VDE types. Recall that the aforementioned VDE-type classifier divided VDE inputs into three categories: Type_1, Type_2 and Type_3.

For VDE inputs classified as being in the Type_1 category, an embodiment may immediately (i.e., prior to the processing described above) set the tend-to-switch tag to be "TTS_tag = N/A" (where N/A is "Not Applicable"), and set switching-confidence factor as "SC_factor = 0.0". A Type_1 VDE input either has no leading word or has the default province as the leading word. In either case, candidates are selected exclusively from the default data base.

For VDE inputs in the Type_2 category (i.e., when a clear Leading Word Suffix is present), an embodiment may set the tend-to-switch tag as TTS_tag = TRUE," and set the switching-confidence factor to indicate that switching is more likely than not (i.e., to a value greater than 0.5, for example SC_factor = 0.7). A clear Leading Word Suffix indicates VDE content beyond the default geographical region.

VDE inputs in the Type_3 category (i.e., VDE input with no clear Leading Word Suffix) may be divided into two cases:

(i) The word immediately following the Leading Word is in the "no-switching" word list. In this case, an embodiment sets "TTS_tag =FALSE", and set switching-confidence factor to indicate that not switching is more likely than not (i.e., to a value less than 0.5, for example SC_factor = 0.3).

(ii) The word immediately after Leading Word is in the "switching" word list. In this case, an embodiment sets "TTS_tag = TRUE", and set switching-confidence factor to indicate that switching is more likely than not (i.e., to a value greater than 0.5, for example SC_factor = 0.7).

**VDE Candidate Presentation**

The User Interface (UI) scheme of the example embodiment determines the final VDE candidate distribution by the TTS_tag and the SC_factor. If "tend-to-switch =N/A," the VDE candidates are selected exclusively from the default data file.

Regardless of whether the TTS_tag is TRUE or FALSE, the example embodiment selects VDE candidates from two geographical data files - the default data file and a non-default data file. As described elsewhere herein, the default data file contains geographical information

For TTS_tag = TRUE, more than half of the VDE candidates are selected from the non-default data file, and those non-default candidates are displayed higher on the list (i.e., as more likely) than the default candidates. Fewer than half of the VDE candidates are selected from the default data file, and are displayed lower on the list as compared to the non-default candidates. An example embodiment designed to output maximally 10 candidates may present the first seven candidates from the switched data file (i.e., the non-default data file), and present the last three candidates from the default data file.

For TTS_tag = FALSE, more than half of the VDE candidates are selected from the default data file, and those default candidates are displayed higher on the list (i.e., as more likely) than the non-default candidates. Feweer than half of the VDE candidates are selected from the non-default data file, and are displayed lower on the list as compared to the default candidates.

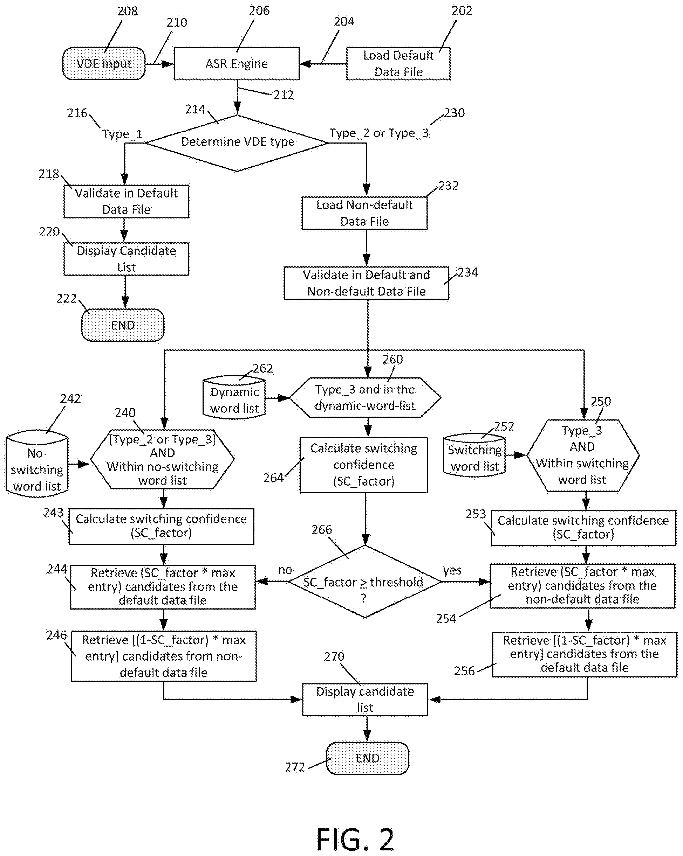

FIG. 2 illustrates a flow diagram that describes operation of the example embodiment presented herein. The example embodiment is implemented as part of an embedded navigation system (ENS), although the embodiment may be implemented in other hardware platforms.

A default data file 202 is loaded 204 into an Automatic Speech Recognition (ASR) engine 206 of the ENS. A VDE input 208 is submitted 210 to the ASR engine 206, which produces 212 a machine-readable version of the VDE input 208. The ENS evaluates the machine-readable VDE input 212 to determine if it is a Type_1, Type_2 or Type_3 input, as described herein.

If the ENS determines 214 that the VDE input 212 is a Type_1 input 216, the ENS validates 218 the VDE input 212 based on the default data file 202, to produce and display 220 a list of candidates that match, at least to some extent, the VDE input 212. Displaying the list of candidates ends 222 the processing for a Type_1 VDE input.

If the ENS determines 114 that the VDE input 212 is either a Type_2 or Type_3 input, a non-default data file 232 is added to the default data file 202, and the ENS validates 234 the VDE input 212 based on one or more of the default data file 202 and the non-default data file 232. The validation results may be processed differently, depending on VDE type and membership in certain lists.

If the ENS determines 240 that the VDE input 212 is a Type_2 or Type_3 input, AND the VDE input 212 is a member of the "no-switching" word list 242 described herein, the ENS determines 243 a switching confidence factor (SC_factor), retrieves 244 a predetermined number N1 of candidates from the default data file, and retrieves 246 a predetermined number M1 of candidates from the non-default data file.

The predetermined number N1 taken from the default data file is given by (SC_factor * max_entry). As an example, let SC_factor be 0.7, and let max_entry be 10 candidates. The predetermined number N1 for this example is therefore (SC_factor * max_entry) = (0.7*10) = 7.

The predetermined number M1 taken from the non-default data file is given by ((1-SC_factor) * max_entry). For the above example, the predetermined number M1 is ((1-SC_factor) * max_entry) = ((1-0.7)*10) = (0.3*10) = 3.

The ENS then displays 270 the list of N1+M1 candidates retrieved. Displaying the list of candidates ends 272 the processing for a VDE input 212 that is a Type_2 or Type_3 input, AND is a member of the "no-switching" word list 242.

If the ENS determines 150 that the VDE input 212 is a Type_3 input, AND the VDE input 212 is a member of the "switching" word list 252 described herein, the ENS determines 253 a switching confidence factor (SC_factor), retrieves 254 a predetermined number N2 of candidates from the non-default data file, and retrieves 256 a predetermined number M2 of candidates from the default data file. The predetermined number N2 taken from the non-default data file is given by (SC_factor * max_entry). As an example, let SC_factor be 0.6, and let max_entry be 20 candidates. The predetermined number N for this example is therefore (SC_factor * max_entry) = (0.6*20) = 12. The predetermined number M taken from the non-default data file is given by ((1-SC_factor) * max_entry). For the above example, the predetermined number M is ((1-SC_factor) * max_entry) = ((1-0.6)*20) = (0.4*20) = 8.

The ENS then displays 270 the list of N1+M1 candidates retrieved. Displaying the list of candidates ends 272 the processing for a VDE input 212 that is a Type_3 input, AND is a member of the "switching" word list 252.

If the ENS determines 260 that the VDE input 212 is a Type_3 input AND the VDE input 212 is a member in the dynamic word list 262, the ENS determines 264 a switching confidence factor (SC_factor, which may be a Bayesian switching confidence factor) and compares 266 SC_factor to a threshold. If the SC_factor is less than the threshold, the ENS retrieves 244 a predetermined number N1 of candidates from the default data file, and retrieves 246 a predetermined number M1 of candidates from the non-default data file, as described above. If the SC_factor is greater than or equal to the threshold, the ENS retrieves 254 a predetermined number N2 of candidates from the non-default data file, and retrieves 256 a predetermined number M2 of candidates from the default data file, as described above. Displaying 270 the list of candidates ends 272 the processing for a VDE input 212 that is a Type_3 input AND the VDE input 212 is a member in the dynamic word list 262.

This example embodiment describes a comparison 266 that evaluates whether or not SC_factor is greater than or equal to a threshold. In other embodiments, the comparison may evaluate whether or not an SC factor is greater than the threshold, rather than greater than or equal to the threshold.

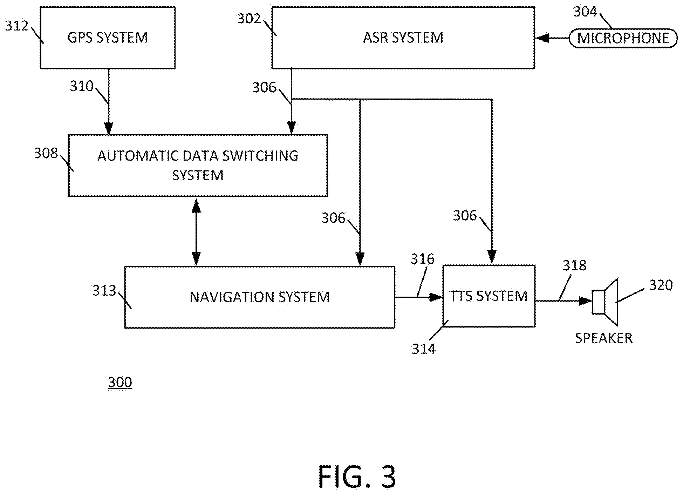

FIG. 3 illustrates a block diagram of an example embedded navigation system that may be used to implement and/or support the described embodiments. FIG. 3 shows a number of interconnected subsystems that together implement the embedded navigation system.

The embedded navigation system (ENS) 300 of FIG. 3 includes an Automatic Speech Recognition (ASR) system 302 that receives user speech input through a microphone 304, converts the user speech to text 306, and provides a text 306 to the automatic data switching system 308 presented in the described embodiments.

The automatic data switching system 308 receives position information 310 about the current location of the ENS 300 from a Global Positioning System (GPS) 312. The automatic data switching system 308 communicates with a navigation system 313 to coordinate selection and use of appropriate geographical data files for validating VDE inputs, and to generate navigational instructions for travel to the selected Pol.

The ASR system 302 also provides the text 306 to the navigation system 313 and to a Text To Speech (TTS) system 314. The TTS system 314 also receives text input 316 from the navigation system 313. The TTS system 314 converts the text it receives from the ASR system 302 and the navigation system 313, converts the text to speech information 318, and provides the speech information 218 to a speaker 220. The speaker 220 converts the speech information 318 to audible speech.

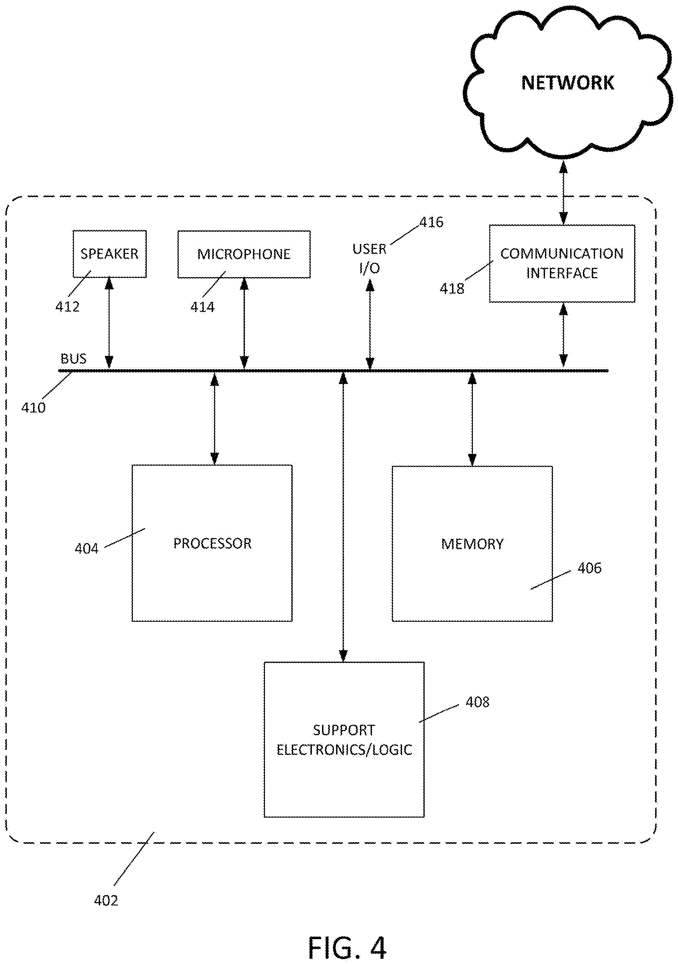

FIG. 4 illustrates an example hardware platform 402 that may be used to implement any or all of the subsystems shown in FIG. 3. The platform 402 includes a processor 404, a memory 406, and support logic 408, each of which are connected to a bus 410

Also connected to the bus 410 are a speaker 412 for providing audible speech output to a user of the platform 402, a microphone 414 for receiving audible speech input from the user, one or more user input/output (I/O) devices 416, and a communications interface 418. At least one of the aforementioned components of the hardware platform 402 is configured to communicate with one or more of the other components, through the bus 410.

Other components normally associated with a hardware platform (e.g., a power supply), although not shown, may also be part of the hardware platform 402. The I/O devices 416 may include any devices for providing output to or input from a user or on behalf of a user. Examples of such input devices may include a keyboard, mouse, stylus or other symbol capture apparatus, gesture recognition apparatus, touch sensitive display, among others. Examples of such output devices include analog or digital display, video projection device, audio speaker, among others.

The communications interface 418 may include a driver or transceiver associated with a medium such as Ethernet cable, fiber optical cable, or other such physical media. The communications interface 418 may alternatively include a wireless interface such as a cellular interface (e.g., 4G, LTE among others), or other wireless interface (e.g., Bluetooth, IEEE 802.11, Zigbee, WIMAX, among others).

It will be apparent that one or more embodiments described herein may be implemented in many different forms of software and hardware. Software code and/or specialized hardware used to implement embodiments described herein is not limiting of the embodiments of the invention described herein. Thus, the operation and behavior of embodiments are described without reference to specific software code and/or specialized hardware - it being understood that one would be able to design software and/or hardware to implement the embodiments based on the description herein.

Further, certain embodiments of the example embodiments described herein may be implemented as logic that performs one or more functions. This logic may be hardware-based, software-based, or a combination of hardware-based and software-based. Some or all of the logic may be stored on one or more tangible, non-transitory, computer-readable storage media and may include computer-executable instructions that may be executed by a controller or processor. The computer-executable instructions may include instructions that implement one or more embodiments of the invention. The tangible, non-transitory, computer-readable storage media may be volatile or non-volatile and may include, for example, flash memories, dynamic memories, removable disks, and non-removable disks.

While this invention has been particularly shown and described with references to example embodiments thereof, it will be understood by those skilled in the art that various changes in form and details may be made therein without departing from the scope of the invention encompassed by the appended claims.

## Claims

1. A method of selecting a geographical data file for voice destination entry (VDE), comprising, by a processor:

   determining a VDE-type associated with a VDE input, the VDE-type determined based on presence or absence in the VDE of leading words or leading word suffixes indicating a geographical region;
   determining a switching confidence factor associated with the VDE input, the switching confidence factor calculated based on one of (i) word probability pairs for words matching the VDE included in a first data file, or (ii) the determined VDE-type;
   based at least on the determined VDE-type and the switching confidence factor, retrieving a first number of candidates from the first data file, and retrieving a second number of candidates from a second data file, wherein geographical items are separated into separate data files, organized by relevant geographical regions.

2. The method of claim 1, wherein determining the VDE-type further includes: determining the VDE-type to be Type_1 when:

   the VDE input includes a leading word that explicitly identifies the current geographical region; or
   the VDE input includes no leading word.

3. The method of claim 2, further including setting the switching confidence factor to zero when the VDE-type is determined to be Type_1.

4. The method of claim 1, wherein determining the VDE-type further includes: determining the VDE-type to be Type_2 when the VDE input includes (i) a leading word that describes a geographical region that is not the current geographical region, and (ii) a leading word suffix.

5. The method of claim 4, further including setting the switching confidence factor to a value indicating that switching from the first data file to the second data file is more likely than not, when the VDE-type is determined to be Type_2.

6. The method of claim 1, wherein determining the VDE-type further includes:
determining the VDE-type to be Type_3 when the VDE input includes a leading word that describes a geographical region that is not the current geographical region, and does not include a leading word suffix.

7. The method of claim 1, wherein retrieving the first number of candidates and the second number of candidates is further based on the VDE input being a member of a switching likelihood word list.

8. The method of claim 7, wherein the switching likelihood word list includes one or more of:

a no-switching word list containing words, each of which is associated with a decision to switch from the first data file to the second data file, when that word occurs immediately after its corresponding leading word;
a switching word list containing words, each of which is associated with a decision to remain with the first data file, when that word occurs immediately after its corresponding leading word;
a dynamic word list containing high-frequency words associated with a particular leading word.

9. The method of claim 8, further including displaying the candidates from the first data file and the candidates from the second data file, wherein an order of the candidates is based at least in part on the VDE input being a member of the switching likelihood word list.

10. The method of claim 1, wherein the first data file contains geographical data associated with a current geographical region, and the second data file contains geographical data associated with a geographical region other than the current geographical region.

11. An apparatus for selecting a geographical data file for voice destination entry (VDE), comprising:

a processor; and
a memory configured to store instructions to be executed by the processor;
the processor being configured to execute the instructions thereby causing the apparatus to:

determine a VDE-type associated with a VDE input, the VDE-type determined based on presence or absence in the VDE of leading words or leading word suffixes indicating a geographical region;
determine a switching confidence factor associated with the VDE input, the switching confidence factor calculated based on one of (i) word probability pairs for words matching the VDE included in a first data file, or (ii) the determined VDE-type;
based at least on the VDE-type and the switching confidence factor, retrieve a first number of candidates from a first data file, and retrieve a second number of candidates from a second data file, wherein geographical items are separated into separate data files, organized by relevant geographical regions.

12. The apparatus of claim 11, the processor being further configured to execute the instructions thereby causing the apparatus to:
designate the VDE-type to be Type_1 when:
the VDE input includes a leading word that explicitly identifies the current geographical region; or the VDE input includes no leading word.

13. The apparatus of claim 11, the processor being further configured to execute the instructions thereby causing the apparatus to:

designate the VDE-type to be Type_2 when the VDE input includes a leading word and a leading word suffix;
and/or the processor being further configured to execute the instructions thereby causing the apparatus to:

designate the VDE-type to be Type_3 when the VDE input includes a leading word without a leading word suffix;
and/or the processor being further configured to execute the instructions thereby causing the apparatus to:

display the candidates from the first data file and the candidates from the second data file, wherein an order of the candidates is based at least in part on the VDE input being a member of a switching likelihood word list.

14. A non-transitory computer-readable medium with computer code instruction stored thereon, the computer code instructions when executed by a processor cause an apparatus to:

determine a VDE-type associated with a VDE input, the VDE-type determined based on presence or absence in the VDE of leading words or leading word suffixes indicating a geographical region;
determine a switching confidence factor associated with the VDE input, the switching confidence factor calculated based on one of (i) word probability pairs for words matching the VDE included in a first data file, or (ii) a determined VDE-type; based on the VDE-type and the switching confidence factor, retrieve a first number of candidates from a first data file, and retrieve a second number of candidates from a second data file, wherein geographical items are separated into separate data files, organized by relevant geographical regions.

15. The non-transitory computer-readable medium of claim 14, the computer code instruction when executed by a processor further cause an apparatus to display the candidates from the first data file and the candidates from the second data file, wherein an order of the candidates is based at least in part on the VDE input being a member of a switching likelihood word list; and/or the computer code instructions when executed by a processor further cause an apparatus to determine the VDE-type to be Type_1 when:

the VDE input includes a leading word that explicitly identifies the current geographical region; or
the VDE input includes no leading word.

**Patentansprüche**

1. Verfahren zum Auswählen einer Datei von geografischen Daten zur Stimmzieleingabe (Voice Destination Entry, VDE), wobei das Verfahren Folgendes umfasst:
durch einen Prozessor:

Bestimmen einer VDE-Art, die mit dem VDE-Eingang assoziiert ist, wobei die VDE-Art, die auf der Basis des Vorhandenseins oder Nichtvorhandenseins in der VDE von führenden Wörtern oder
Suffixen von führenden Wörtern, die eine geografische Region anzeigen, bestimmt wird;
Bestimmen eines Umschaltvertrauensfaktors, der mit dem VDE-Eingang assoziiert ist, wobei der Umschaltvertrauensfaktor berechnet wird auf der Basis von einem von (i) Wortwahrscheinlichkeitspaaren für Wörter, die mit der VDE übereinstimmen, die in einer ersten Datendatei eingeschlossen ist, oder (ii) der bestimmten VDE-Art; auf der Basis von mindestens der bestimmten VDE-Art und dem Umschaltvertrauensfaktor, Abrufen einer ersten Anzahl von Kandidaten von der ersten Datendatei und Abrufen einer zweiten Anzahl von Kandidaten von einer zweiten Datendatei, wobei geografische Begriffe in getrennten Datendateien getrennt sind, die nach relevanten geografischen Regionen organisiert sind.

2. Verfahren nach Anspruch 1, wobei das Bestimmen der VDE-Art ferner Folgendes umfasst:
Bestimmen, dass die VDE-Art Art_1 ist, wenn:

der VDE-Eingang ein führendes Wort einschließt, das explizit die aktuelle geografische Region identifiziert; oder
der VDE-Eingang kein führendes Wort einschließt.

3. Verfahren nach Anspruch 2, ferner einschließend ein Einstellen des Umschaltvertrauensfaktors auf null, wenn die VDE-Art als Art_1 bestimmt ist.

4. Verfahren nach Anspruch 1, wobei das Bestimmen der VDE-Art ferner Folgendes einschließt:
Bestimmen, dass die VDE-Art Art_2 ist, wenn der VDE-Eingang (i) ein führendes Wort, das eine geografische Region beschreibt, die nicht die aktuelle geografische Region ist, und (ii) ein Suffix eines führenden Worts einschließt.

5. Verfahren nach Anspruch 4, ferner einschließend ein Einstellen des Umschaltvertrauensfaktors auf einen Wert, der indiziert, dass ein Umschalten von der ersten Datendatei zu der zweiten Datendatei wahrscheinlicher ist als ein Nichtumschalten, wenn die VDE-Art als Art_2 bestimmt ist.

**6.** Verfahren nach Anspruch 1, wobei das Bestimmen der VDE-Art ferner Folgendes einschließt:
Bestimmen, dass die VDE-Art Art_3 ist, wenn der VDE-Eingang ein führendes Wort einschließt, das eine geografische Region beschreibt, die nicht die aktuelle geografische Region ist, und kein Suffix eines führenden Worts einschließt.

**7.** Verfahren nach Anspruch 1, wobei das Abrufen der ersten Anzahl von Kandidaten und der zweiten Anzahl von Kandidaten ferner darauf basiert, dass der VDE-Eingang ein Element einer Umschaltwahrscheinlichkeitswortliste ist.

**8.** Verfahren nach Anspruch 7, wobei die Umschaltwahrscheinlichkeitswortliste eines oder mehrere einschließt von:

einer Nichtumschaltwortliste, die Wörter enthält, von denen jedes mit einer Entscheidung assoziiert ist, von der ersten Datendatei auf die zweite Datendatei umzuschalten, wenn dieses Wort unmittelbar nach seinem entsprechenden führenden Wort erscheint;
einer Umschaltwortliste, die Wörter enthält, von denen jedes mit einer Entscheidung assoziiert ist, bei der ersten Datendatei zu verbleiben, wenn dieses Wort unmittelbar nach seinem entsprechenden führenden Wort erscheint;
eine dynamische Wortliste, die Wörter mit einer großen Häufigkeit enthält, die mit einem speziellen führenden Wort assoziiert sind.

**9.** Verfahren nach Anspruch 8, ferner einschließend ein Anzeigen der Kandidaten von der ersten Datendatei und der Kandidaten von der zweiten Datendatei, wobei eine Reihenfolge der Kandidaten mindestens teilweise darauf basiert, dass der VDE-Eingang ein Element der Umschaltwahrscheinlichkeitswortliste ist.

**10.** Verfahren nach Anspruch 1, wobei die erste Datendatei geografische Daten enthält, die mit einer aktuellen geografischen Region assoziiert sind, und die zweite Datendatei geografische Daten enthält, die mit einer geografischen Region assoziiert sind, die sich von der aktuellen geografischen Region unterscheidet.

**11.** Vorrichtung zum Auswählen von Dateien von geografischen Daten zur Stimmzieleingabe (VDE), wobei die Vorrichtung Folgendes umfasst:

einen Prozessor; und
einen Speicher, der dazu konfiguriert ist, Anweisungen zu speichern, die durch den Prozessor ausgeführt werden sollen;
wobei der Prozessor dazu konfiguriert ist, die Anweisungen auszuführen, wodurch die Vorrichtung zu Folgendem veranlasst wird:

Bestimmen einer VDE-Art, die mit dem VDE-Eingang assoziiert ist, wobei die VDE-Art, die auf der Basis des Vorhandenseins oder Nichtvorhandensein in der VDE von führenden Wörtern oder Suffixen von führenden Wörtern, die eine geografische Region anzeigen, bestimmt wird;
Bestimmen eines Umschaltvertrauensfaktors, der mit dem VDE-Eingang assoziiert ist, wobei der Umschaltvertrauensfaktor auf der Basis von einem von (i) Wortwahrscheinlichkeitspaaren für Wörter, die mit der VDE übereinstimmen, die in der ersten Datendatei eingeschlossen sind, oder (ii) der bestimmten VDE-Art berechnet wird;
auf der Basis der VDE-Art und des Umschaltvertrauensfaktors Abrufen einer Anzahl von ersten Kandidaten von einer ersten Datendatei und Abrufen einer zweiten Anzahl von Kandidaten von einer zweiten Datendatei, wobei geografische Einzelheiten in getrennten Datendateien getrennt sind, die nach relevanten geografischen Regionen organisiert sind.

**12.** Vorrichtung nach Anspruch 11, wobei der Prozessor ferner dazu konfiguriert ist, die Anweisungen auszuführen, wodurch die Vorrichtung zu Folgendem veranlasst wird:
Zuordnen der VDE-Art als Art_1, wenn:
der VDE-Eingang ein führendes Wort einschließt, das die aktuelle geografische Region explizit identifiziert; oder
der VDE-Eingang kein führendes Wort einschließt.

**13.** Vorrichtung nach Anspruch 11, wobei der Prozessor ferner dazu konfiguriert ist, die Anweisungen auszuführen, wodurch die Vorrichtung zu Folgendem veranlasst wird:

Zuordnen der VDE-Art als Art_2, wenn der VDE-Eingang ein führendes Wort und ein Suffix eines führenden Worts einschließt;

und/oder der Prozessor ferner dazu konfiguriert ist, die Anweisungen auszuführen, wodurch die Vorrichtung zu Folgendem veranlasst wird:

Zuordnen der VDE-Art als Art_3, wenn der VDE-Eingang ein führendes Wort ohne ein Suffix eines führenden Worts einschließt;

und/oder wobei der Prozessor ferner dazu konfiguriert ist, die Anweisungen auszuführen, wodurch die Vorrichtung zu Folgendem veranlasst wird:

Anzeigen der Kandidaten von der ersten Datendatei und der Kandidaten von der zweiten Datendatei, wobei eine Reihenfolge der Kandidaten mindestens teilweise darauf basiert, dass der VDE-Eingang ein Element einer Umschaltwahrscheinlichkeitswortliste ist.

14. Nichtflüchtiges computerlesbares Medium mit darauf gespeicherten Computercodeanweisungen, wobei die Computercodeanweisungen, wenn sie durch einen Prozessor ausgeführt werden, eine Vorrichtung zu Folgendem veranlassen:

Bestimmen einer VDE-Art, die mit einem VDE-Eingang assoziiert ist, wobei die VDE-Eingabe, die auf der Basis des Vorhandenseins oder Nichtvorhandenseins in der VDE von führenden Wörtern oder Suffixen von führenden Wörtern, die eine geografische Region anzeigen, bestimmt wird;

Bestimmen eines Umschaltvertrauensfaktors, der mit dem VDE-Eingang assoziiert ist, wobei der Umschaltvertrauensfaktor auf der Basis von einem von (i) Wortwahrscheinlichkeitspaaren für Wörter, die mit der VDE übereinstimmen, die in der ersten Datendatei eingeschlossen sind, oder (ii) einer bestimmten VDE-Art berechnet wird; auf der Basis der VDE-Art und des Umschaltvertrauensfaktors Abrufen einer ersten Anzahl von Kandidaten von einer ersten Datendatei und Abrufen einer zweiten Anzahl von Kandidaten einer zweiten Datendatei, wobei geografische Einzelheiten in getrennten Datendateien getrennt sind, die nach relevanten geografischen Regionen organisiert sind.

15. Nichtflüchtiges computerlesbares Medium nach Anspruch 14, wobei die Computercodeanweisungen, wenn sie durch einen Prozessor ausgeführt werden, die Vorrichtung ferner dazu veranlassen, die Kandidaten von der ersten Datendatei und die Kandidaten von der zweiten Datendatei anzuzeigen, wobei eine Reihenfolge der Kandidaten mindestens teilweise darauf basiert, dass der VDE-Eingang ein Element einer Umschaltwahrscheinlichkeitswortliste ist;

und/oder wobei die Computercodeanweisungen, wenn sie durch einen Prozessor ausgeführt werden, die Vorrichtung ferner dazu veranlassen, zu bestimmen, dass die VDE-Art Art_1 ist, wenn:

der VDE-Eingang ein führendes Wort einschließt, das explizit die aktuelle geografische Region identifiziert; oder der VDE-Eingang kein führendes Wort einschließt.

## Revendications

1. Procédé de sélection d'un fichier de données géographiques pour une entrée vocale de destination (VDE), comprenant, par un processeur :

la détermination d'un type de VDE associé à une entrée VDE, le type de VDE étant déterminé sur la base de la présence ou de l'absence dans la VDE de mots clés ou de suffixes de mots clés, indiquant une région géographique ;

la détermination d'un facteur de confiance de commutation associé à l'entrée VDE, le facteur de confiance de commutation étant calculé sur la base de l'un (i) des paires de probabilités de mots pour les mots correspondant à la VDE inclus dans un premier fichier de données, ou (ii) du type de VDE déterminé ;

sur la base au moins du type de VDE déterminé et du facteur de confiance de commutation, l'extraction d'un premier nombre de candidats du premier fichier de données, et l'extraction d'un second nombre de candidats d'un second fichier de données, dans lequel les éléments géographiques sont séparés en fichiers de données distincts, organisés par régions géographiques pertinentes.

2. Procédé selon la revendication 1, dans lequel la détermination du type de VDE comprend en outre :
la détermination du type de VDE comme étant de Type_1 lorsque :

l'entrée VDE comprend un mot clé qui identifie explicitement la région géographique actuelle ; ou
l'entrée VDE ne comprend pas de mot clé.

3. Procédé selon la revendication 2, comprenant en outre la mise à zéro du facteur de confiance de commutation lorsque le type de VDE est déterminé comme étant de Type_1.

4. Procédé selon la revendication 1, dans lequel la détermination du type de VDE comprend en outre :
la détermination du type de VDE comme étant de Type_2 lorsque l'entrée VDE comprend (i) un mot clé qui décrit une région géographique qui n'est pas la région géographique actuelle, et (ii) un suffixe de mot clé.

5. Procédé selon la revendication 4, comprenant en outre le réglage du facteur de confiance de commutation sur une valeur indiquant que le comutation du premier fichier de données au second fichier de données est plus probable qu'improbable, lorsque le type de VDE est déterminé comme étant de Type_2.

6. Procédé selon la revendication 1, dans lequel la détermination du type de VDE comprend en outre :
la détermination du type de VDE comme étant de Type_3 lorsque l'entrée VDE comprend un mot clé qui décrit une région géographique qui n'est pas la région géographique actuelle, et ne comprend pas de suffixe de mot clé.

7. Procédé selon la revendication 1, dans lequel l'extraction du premier nombre de candidats et du second nombre de candidats est en outre basée sur l'entrée VDE étant un élément d'une liste de mots à probabilité de commutation.

8. Procédé selon la revendication 7, dans lequel la liste de mots à probabilité de commutation comprend un ou plusieurs des éléments suivants :

une liste de mots sans commutation contenant des mots, chacun d'entre eux étant associé à une décision de passer du premier fichier de données au second fichier de données, lorsque ce mot apparaît immédiatement après son mot clé correspondant ;
une liste de mots avec commutation contenant des mots, chacun d'entre eux étant associé à une décision de rester sur le premier fichier de données, lorsque ce mot apparaît immédiatement après son mot clé correspondant ;
une liste de mots dynamique contenant des mots à haute fréquence associés à un mot clé particulier.

9. Procédé selon la revendication 8, comprenant en outre l'affichage des candidats du premier fichier de données et des candidats du second fichier de données, dans lequel un ordre des candidats est basé au moins en partie sur l'entrée VDE étant un élément de la liste de mots à probabilité de commutation.

10. Procédé selon la revendication 1, dans lequel le premier fichier de données contient des données géographiques associées à une région géographique actuelle, et le second fichier de données contient des données géographiques associées à une région géographique autre que la région géographique actuelle.

11. Appareil de sélection d'un fichier de données géographiques pour une entrée vocale de destination (VDE), comprenant :

un processeur ; et
une mémoire configurée pour stocker des instructions à exécuter par le processeur ;
le processeur étant configuré pour exécuter les instructions amenant ainsi l'appareil à :

déterminer un type de VDE associé à une entrée VDE, le type de VDE étant déterminé sur la base de la présence ou de l'absence dans la VDE de mots clés ou de suffixes de mots clés, indiquant une région géographique ;
déterminer un facteur de confiance de commutation associé à l'entrée VDE, le facteur de confiance de commutation étant calculé sur la base de l'un (i) des paires de probabilités de mots pour les mots correspondant à la VDE inclus dans un premier fichier de données, ou (ii) du type de VDE déterminé ;
sur la base au moins du type de VDE et du facteur de confiance de commutation, extraire un premier nombre de candidats d'un premier fichier de données et extraire un second nombre de candidats d'un second fichier de données, dans lequel les éléments géographiques sont séparés en fichiers de données distincts, organisés par régions géographiques pertinentes.

12. Appareil selon la revendication 11, le processeur étant en outre configuré pour exécuter les instructions amenant ainsi l'appareil à :
désigner le type de VDE comme étant de Type_1 lorsque :
l'entrée VDE comprend un mot clé qui identifie explicitement la région géographique actuelle ; ou l'entrée VDE ne comprend pas de mot clé.

13. Appareil selon la revendication 11, le processeur étant en outre configuré pour exécuter les instructions amenant ainsi l'appareil à :

désigner le type de VDE comme étant de Type_2 lorsque l'entrée VDE comprend un mot clé et un suffixe de mot clé ;
et/ou le processeur étant configuré pour exécuter les instructions amenant ainsi l'appareil à :

désigner le type de VDE comme étant de Type_3 lorsque l'entrée VDE comprend un mot clé sans suffixe de mot clé ;
et/ou le processeur étant en outre configuré pour exécuter les instructions amenant ainsi l'appareil à :
afficher les candidats du premier fichier de données et les candidats du second fichier de données, dans lequel un ordre des candidats est basé au moins en partie sur l'entrée VDE étant un élément d'une liste de mots à probabilité de commutation.

14. Support non transitoire lisible par ordinateur sur lequel sont stockées des instructions de code informatique, les instructions de code informatique, lorsqu'elles sont exécutées par un processeur, amènent un appareil à :

déterminer un type de VDE associé à une entrée VDE, le type de VDE étant déterminé sur la base de la présence ou de l'absence dans la VDE de mots clés ou de suffixes de mots clés, indiquant une région géographique ;
déterminer un facteur de confiance de commutation associé à l'entrée VDE, le facteur de confiance de commutation étant calculé sur la base de l'un (i) des paires de probabilités de mots pour les mots correspondant à la VDE inclus dans un premier fichier de données, ou (ii) d'un type de VDE déterminé ;
sur la base du type de VDE et du facteur de confiance de commutation, extraire un premier nombre de candidats d'un premier fichier de données et extraire un second nombre de candidats d'un second fichier de données, dans lequel les éléments géographiques sont séparés en fichiers de données distincts, organisés par régions géographiques pertinentes.

15. Support non transitoire lisible par ordinateur selon la revendication 14, les instructions de code informatique, lorsqu'elles sont exécutées par un processeur, amènent en outre un appareil à afficher les candidats du premier fichier de données et les candidats du second fichier de données, dans lequel un ordre des candidats est basé au moins en partie sur l'entrée VDE étant un élément d'une liste de mots à probabilité de commutation ;
et/ou les instructions du code informatique, lorsqu'elles sont exécutées par un processeur, amènent en outre un appareil à déterminer le type de VDE comme étant de Type_1 lorsque :

l'entrée VDE comprend un mot clé qui identifie explicitement la région géographique actuelle ; ou
l'entrée VDE ne comprend pas de mot clé.

Jiangsu
Province

Shanghai
Province
104

Vehicle with onboard
navigation system
using Shanghai data

102

Zhejiang
Province
106

## FIG. 1A

Jiangsu
Province

Shanghai
Province
104

Zhejiang
Province
106

Vehicle with onboard
navigation system using a
combination of Shanghai
data and Zhejiang data

102'

## FIG. 1B

FIG. 1C

FIG. 2

312 — GPS SYSTEM

302 — ASR SYSTEM

304 — MICROPHONE

310

306

308 — AUTOMATIC DATA SWITCHING SYSTEM

306

306

313 — NAVIGATION SYSTEM

316

318

314

320 — SPEAKER

TTS SYSTEM

300

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 549496 A
- US 20080091443 A1